# EUROPEAN PATENT SPECIFICATION

(11) **EP 0 647 948 B1**
(45) Date of publication and mention of the grant of the patent: **09.04.1997**
(21) Application number: 94201993.6
(22) Date of filing: 09.07.1994
(51) Int. Cl.: G21D 1/00, B23K 26/00, B23D 21/00

(54) **A remote controlled laser apparatus for sealing and cutting internally contaminated piping**
Fernbedientes Lasergerät zum Abdichten und Schneiden von innen-kontaminierten Rohren
Equipement laser télécommandé pour rendre étanche et couper une tuyauterie contaminée à l'intérieur

(30) Priority: 12.10.1993 IT MI932158
(43) Date of publication of application: 12.04.1995
(73) Proprietor: FINMECCANICA S.p.A. AZIENDA ANSALDO, I-16128 Genova (IT)
(72) Inventor: Cai, Giulio, I-16156 Pegli - Genova (IT)
(74) Representative: Falcetti, Carlo

(56) References cited:
- EP-A- 0 538 206
- US-A- 3 263 465
- US-A- 4 273 398
- PROCEEDINGS OF THE INT. CONF. ON APPLICATIONS OF LASERS AND ELECTRO-OPTICS - ICALEO 85 - SAN FRANCISCO, CALIFORNIA 11-14 NOV.1985 pages 145 - 152 B.S. WEIL 'A LASER CUTTING SYSTEM FOR NUCLEAR FUEL DISASSEMBLY'
- DATABASE WPI Week 8738, Derwent Publications Ltd., London, GB; AN 87-269023 & JP-A-62 189 000 (HITACHI) 18 August 1987
- DATABASE WPI Week 8651, Derwent Publications Ltd., London, GB; AN 86-336691 & JP-A-61 253 497 (MITSUBISHI) 11 November 1986

## Description

The present invention relates to a remote controlled apparatus for sealing and cutting piping of relatively small diameter, preferably by the use of a laser.

In dismantling potentially hazardous plants, such as nuclear plants, in particular the fuel system thereof, or chemical plants that have been processing toxic substances, as well as in servicing such plants, the procedure followed to remove piping which contain contaminants is specially important.

The techniques available heretofore for the above operation include plasma cutting, oxygen cutting, mechanical cutting using either saws or shears or abrasive cutters, and squashing followed by mechanical cutting, all of which fail to ensure full sealing of both the pipe portions to be removed and those to be left in place, thereby giving rise to two orders of problems:
the release of contaminants to the environment from the pipe interiors;
the need for attendance by human operators, risking exposure to contamination or radiation.

An example of mechanical sealing and cutting is provided by EP-A-0538206 where a remotely controlled apparatus for sealing and cutting of internally contaminated pipes is disclosed in which a press first squashes a portion of a pipe, then two parallel wedges plastically cold set two adjacent sections of the squashed portion, the cold setting being followed by a punching operation, intermediate to the two adjacent sections, which cuts the pipe.

Tight sealing of the parted pipe cannot be assured particularly if a pressurized fluid is contained therein.

An example of plasma cutting technique is provided in the document JP-A-61253497 where it is proposed to first squash a portion of the pipe, then to cut the squashed portion by a plasma torch, which by melting the cut edges should provide tight sealing of the parted pipe.

Even this technique is not as reliable as it would be desirable.

It is the object of this invention, therefore, to overcome the above deficiencies of the prior art by providing a remote controlled apparatus equipped with a working head which can both cut pipes for removal from said potentially hazardous plants and seal off the cut pipes, thereby fully confining the contaminants to the interior of the pipes.

These results are achieved by the apparatus of the present invention and an innovative technique which comprises the steps of first squashing a segment of the pipe at a section thereof, and then sealing it along two sections of the squashed segment, followed by cutting at a location intermediate the two sections, the sealing and cutting steps being carried out using a laser beam of medium power propagated over a light guide to a torch bit which is carried on an automatic working head and can perform all the required operations under remote control.

The following benefits are offered by this apparatus:
full sealing of the parted pipe segments, even when a pressurized fluid is contained therein;
automation, and remote control of the operations even a long distance away from the job site (up to about 100 m away);
maximized lightness and maneuvrability of the working head;
maximized personnel safety.

In general, the apparatus of the present invention, conceived for dismantling or servicing operations to be carried out on potentially hazardous plants, as mentioned above, which involve removal or replacement of piping, for the purpose of promoting optimum working conditions by having said operations remote controlled and contamination held back, comprises a working head carried on a movable mechanical arm, associated with a laser torch and provided with a handling system adapted to pick up a pipe, squash it, form two sealed terminating areas by welding the material, and finally cut the pipe between the two welds, again by laser.

The subject apparatus avoids spreading the contamination and makes for easy removal of the piping in question, thereby significantly reducing the risks for personnel employed in aggressive environments.

The features and advantages of the apparatus according to the present invention will be more clearly apparent from the following description of a preferred embodiment thereof, given by way of example and not of limitation, and from the accompanying drawings, in which:
Figure 1 is a part-sectional side view showing schematically a preferred embodiment of a working head for the apparatus according to the present invention;
Figure 2 is a rear view showing schematically the working head of Figure 1;
Figure 3 is a side view showing schematically the working head of Figure 1 as set up for squashing a pipe;
Figure 4 is a front view showing schematically the working head of Figure 1 after the squashing step and ready for sealing and cutting;
Figure 5 is a sectional view illustrating the effect of the sealing and cutting steps carried out by the apparatus of Figure 1.

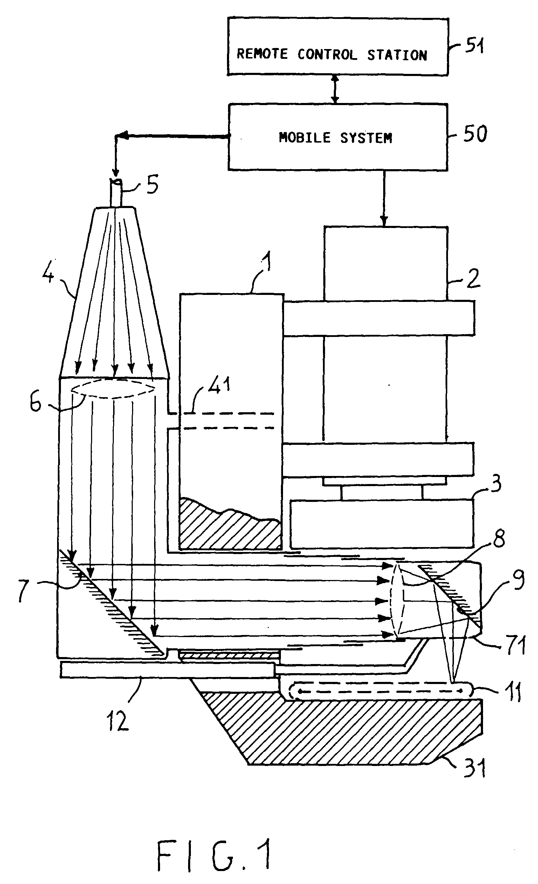

With reference to Figure 1, generally and schematically shown therein is a working head for the apparatus of the present invention, comprising a C-shaped supporting frame 1 having a hydraulic cylinder 2 provided with a punch 3, opposite and hydraulically approachable to a fixed jaw 31, attached thereto.

The frame also supports a telescoping laser 4 torch.

The laser beam comes from outside over a light guide 5 and travels through the torch along an optical path that has passed through a collimator lens 6, to be then deflected by a plane mirror 7 into a telescoping arm 71 extending through the structure 1.

The laser beam is finally reflected at 90° by a plane mirror 9 at the torch head and is focussed at the work point 10, that is a pipe 11 to be cut which is depicted squashed already in Figure 1.

The beam is focussed by means of a focussing lens 8 inside the head of the telescoping arm 71.

The telescoping movement of the torch is provided by a hydraulic cylinder 12.

The torch 4 is attached to the frame 1 and is adapted to rotate a few degrees about a parallel axis 41 to the telescoping arm 71.

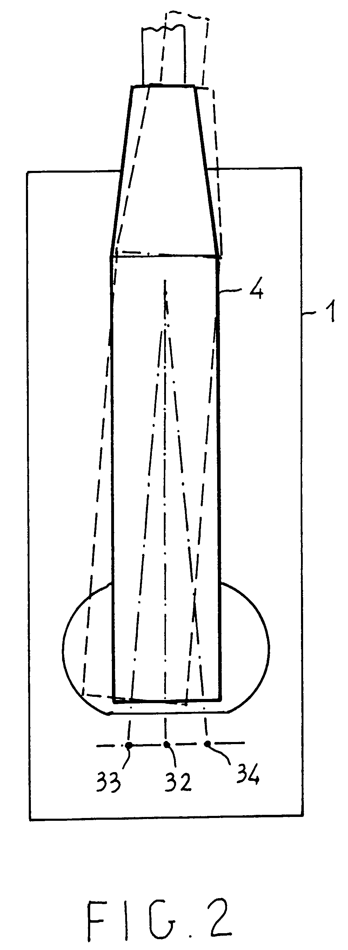

This rotation, as shown in Figure 2, combined with the reach of the telescoping arm, allows the focal point 10 to be set on the pipe to be cut, along three transverse lines to the axis of the pipe: a central cut line 32 and two weld lines 33, 34 spaced a few millimeters away from the cut line and parallel to the latter, respectively on one side and the other of the cut line.

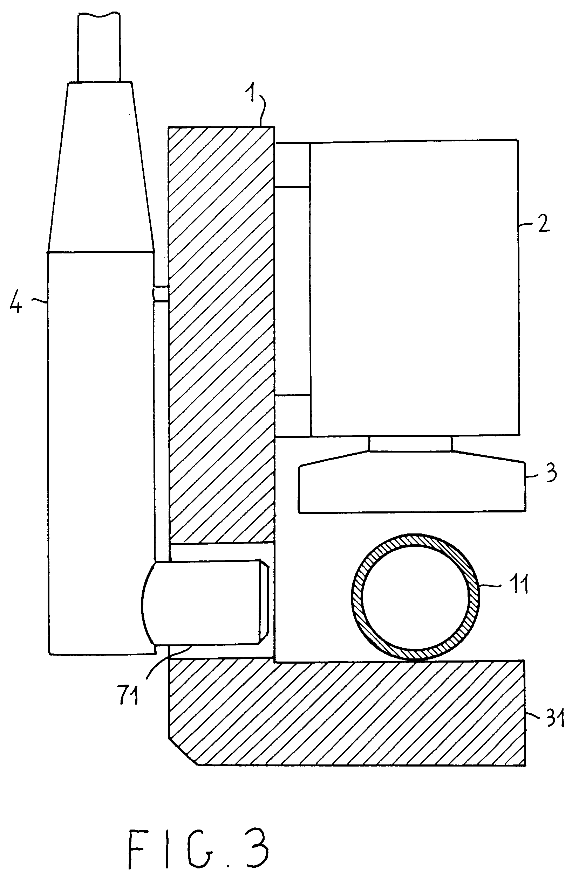

With the punch 3 in the raised position and the arm 71 of the torch 4 retracted, the working head is ready to be hooked up to the pipe to be cut, as shown in Figure 3.

This operation can be remote controlled, with the working head (frame 1 and apparatus carried thereon) placed on a moving system of a commercially available type, such as a carriage with an arm endowed with mobility along the three Cartesian axes and operable from a distance, with the working area being displayed by means of a miniature TV camera. These members, known per se, of the cutting apparatus are represented schematically in Figure 1 within two blocks 50 (moving system) and 51 (remote control station).

With the various components of the working head that are operated by means of hydraulic jacks, the laser and hydraulic electronic central control unit can in all events locate away from the work point and transmit the signals to the working head through a flexible connection such as a light guide for the laser beam, two or more hoses for hydraulic delivery and return, and electric cables for the TV camera and for controlling solenoid valves.

All this portion has not been shown here schematically for brevity, since it is part of known technology and currently in production and, therefore, readily available on the market. The laser and hydraulic/electronic central unit can be controlled, in turn, from a remote station by cable or radio.

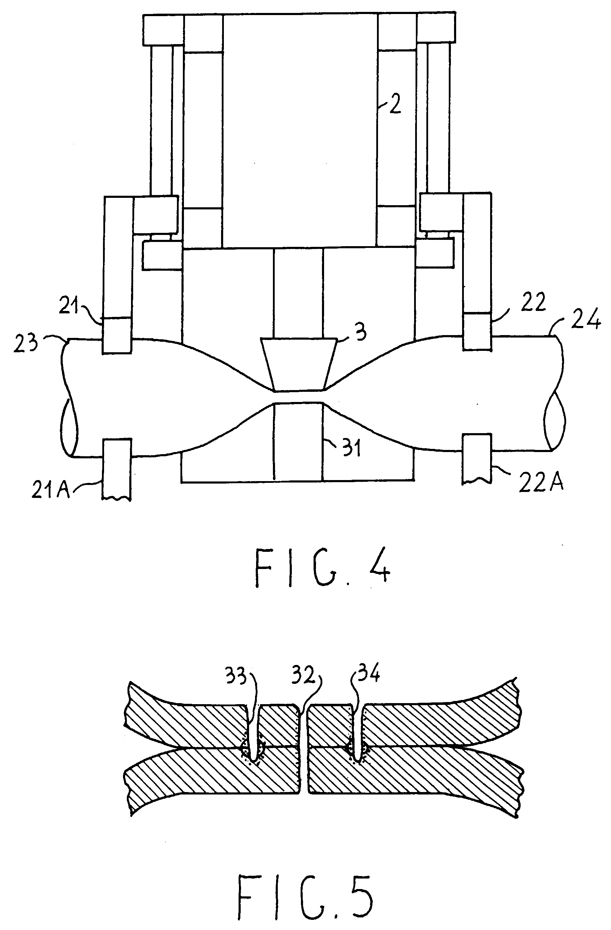

To continue the description of the processing steps, after the operator who is controlling from a distance has set the working head to the pipe to be cut, as shown in Figure 3, the punch 3 is actuated to squash and clamp down the pipe as shown in Figure 4 where the working head is viewed sideways rather than frontally.

The punch, which in the accompanying figures has been schematically represented as a simple metal block, is actually provided with an opening which, while it presses the squashed pipe, allows the telescoping part of the torch 4 to pass therethrough.

Alternatively, the punch 4 may be made up of three side-by-side co-operating elements, hydraulically actuated in an independent manner, so that on completion of the pipe squashing, the central element can be retracted to allow the telescoping arm 71 to be extended.

As a further modification, shown in Figure 4, the punch 3 may be fully retracted, the pipe being held down by two hydraulically actuated jaws 21, 22 which co-operate with the fixed jaw 31, and optionally with lateral saddles 21A, 22A, acting on the undeformed ends 23, 24 of the pipe sections laterally of the jaw 31.

The telescoping arm 71, by moving back and forth over the squashed pipe and longitudinally along the pipe axis, allows the laser beam to be focussed first along the weld lines 33, 34 and then along the centerline of the cut.

The ancillary gas required for cutting may be conveyed to the cutting area through a suitable pipe and collected by exhaust arrangements, not shown.

By controlling the power of the laser beam, the flow rate of the ancillary gas, and the duration of the radiating steps with respect to the thickness to be cut through and welded, it becomes possible to first perform a partial cut in the pipe to a depth slightly greater than the wall thickness of the pipe, with local melting of the walls, and then to seal the squashed pipe along the weld sections 33, 34, and afterwards cut the pipe completely through along the cut section 32.

Figure 5 shows the resultant cuts in cross-section, as have been obtained experimentally.

On completion of the operation, the tools are returned to their original positions and the head is disengaged from the two pipe segments, to then be transferred to another section of the pipe where the same operations as described above will be carried out.

Thus, removable pipe segments are obtained which are sealed at both ends, while the pipe portions which are to remain in place are also sealed at their respective ends. The segments may be removed by specific remote controlled handling equipment, or by the cutting apparatus itself, by providing for independent actuation of the jaws 21, 22 of Figure 4, and hence, independent picking up of the segment to be removed, for example.

Thus, the apparatus particularly suits the dismantling of potentially hazardous plants, which can be cut down into segments and removed.

However, its usefulness does not end with the dismantling operations, and the apparatus may also be used for servicing operations.

In this case, the parts to be replaced can be cut up into sealed segments which are then removed at no contamination risk, and the hazardous operations are reduced in number and confined to the re-opening of the segments for connection and the completion of the connections to new piping.

The punch 3 and laser torch may be arranged to work from opposite positions relative to the fixed jaw 31, which would be provided in this case with a suitable port at the location of the weld and cut sections for the laser beam to go through.

Also, the laser torch, while being preferred because it enables the welding and cutting process to be accurately controlled, could be replaced with torches of another type, such as gas torches.

## Claims

1. A remote controlled apparatus for sealing and cutting internally contaminated piping, comprising
handling means (50) shiftable along the X,Y,Z Cartesian axes;
a working head carried on said handling means shiftably along the X,Y,Z, Cartesian axes and comprising means (3,31) for squashing a pipe segment, means (4) for sealing two contiguous sections of said segment and for cutting said segment intermediate to said two sealed sections, and
actuators (2,12) for said squashing, sealing and cutting means, and remote control and monitoring means (51) for said actuators, characterized in that said sealing and cutting means (4) comprise means (4) for partially cutting and locally melting within said cutting said two contiguous sections, whereby sealing them.

2. An apparatus according to claim 1, characterized in that said handling means (50) comprises a moving carriage.

3. An apparatus according to claim 1 or 2, characterized in that said handling means (50) comprises an extendible arm.

4. An apparatus according to the preceding claims, characterized in that said means (3,31) for squashing a pipe segment comprises a punch assembly and said sealing and cutting means (4) comprises a laser system.

5. An apparatus according to Claim 4, wherein said laser system (4) includes a torch provided with a telescopic head (71) for focussing a laser beam along a cut section (32).

6. An apparatus according to Claim 5, wherein said telescoping head (71) is movable transversely of said cut section (32) for focussing said laser beam along at least a pair of sections (33,34) parallel to said cut section (32).

7. An apparatus according to the preceding claims, characterized in that said actuators (2,12) comprises hydraulic jacks.

8. An apparatus according to the preceding claims, characterized in that said remote control and monitoring means (51) comprises a remote control station with cable or radio connection.

9. An apparatus according to the preceding claims and including a remote display means.

10. An apparatus according to the preceding claims and including means (21,21A,22,22A) for picking up and removing segments of the cut pipe.

## Patentansprüche

1. Eine ferngesteuerte Vorrichtung zum Abdichten und Schneiden von intern kontaminierten Rohren, mit folgenden Merkmalen:
einer Handhabungseinrichtung (50), die entlang der kartesischen X-, Y-, Z-Achsen verschiebbar ist;
einem Arbeitskopf, der auf der Handhabungseinrichtung entlang der kartesischen X-, Y-, Z-Achsen verschiebbar getragen wird, und welcher eine Einrichtung (3, 31) zum Zusammendrücken eines Rohrsegments, eine Einrichtung (4) zum Abdichten von zwei angrenzenden Abschnitten des Segments und zum Schneiden des Segments zwischen den zwei abgedichteten Abschnitten aufweist; und
Betätigungseinrichtungen (2, 12) für die Zusammendrück-, die Abdichtungs- und die Schneideeinrichtung und eine Fernsteuerungs- und Überwachungseinrichtung (51) für die Betätigungseinrichtungen, dadurch gekennzeichnet, daß die Abdichtungs- und Schneideeinrichtung (4) eine Einrichtung (4) zum teilweisen Schneiden und lokalen Schmelzen innerhalb des Schneidens der zwei angrenzenden Abschnitte aufweist, wodurch dieselben abgedichtet werden.

2. Eine Vorrichtung gemäß Anspruch 1, dadurch gekennzeichnet, daß die Handhabungseinrichtung (50) einen sich bewegenden Wagen aufweist.

3. Eine Vorrichtung gemäß Anspruch 1 oder 2, dadurch gekennzeichnet, daß die Handhabungseinrichtung (50) einen ausstreckbaren Arm aufweist.

4. Eine Vorrichtung gemäß einem der vorhergehenden Ansprüche, dadurch gekennzeichnet, daß die Einrichtung (3, 31) zum Zusammendrücken eines Rohrsegments eine Stanzanordnung aufweist, und daß die Abdichtungs- und Schneideeinrichtung (4) ein Lasersystem umfaßt.

5. Eine Vorrichtung gemäß Anspruch 4, bei der das Lasersystem (4) eine Fackel aufweist, die mit einem Teleskopkopf (71) zum Fokussieren eines Laserstrahls entlang eines Schnittabschnitts (32) versehen ist.

6. Eine Vorrichtung gemäß Anspruch 5, bei der der Teleskopkopf (71) transversal bezüglich des Schneideabschnitts (32) zum Fokussieren des Laserstrahls entlang zumindest eines Paars von Abschnitten (33, 34), die zu dem Schneideabschnitt (32) parallel sind, bewegbar ist.

7. Eine Vorrichtung gemäß einem der vorhergehenden Ansprüche, dadurch gekennzeichnet, daß die Betätigungseinrichtungen (2, 12) Preßköpfe aufweisen.

8. Eine Vorrichtung gemäß einem der vorhergehenden Ansprüche, dadurch gekennzeichnet, daß die Fernsteuerungs- und Überwachungseinrichtung (51) eine Fernsteuerungsstation mit einer Kabel- oder Funkverbindung aufweist.

9. Eine Vorrichtung gemäß einem der vorhergehenden Ansprüche, welche eine entfernte Anzeigeeinrichtung aufweist.

10. Eine Vorrichtung gemäß einem der vorhergehenden Ansprüche, welche eine Einrichtung (21, 21A, 22, 22A) zum Aufnehmen und Entfernen von Segmenten des geschnittenen Rohrs aufweist.

## Revendications

1. Machine télécommandée pour obturer et couper une tuyauterie contaminée intérieurement, comprenant
un moyen de manipulation (50) déplaçable le long des axes cartésiens X, Y, Z ;
une tête de travail portée par ledit moyen de manipulation, déplaçable le long des axes cartésiens X, Y, Z et comprenant un moyen (3, 31) pour aplatir un segment de tuyau, un moyen (4) pour obturer deux parties contiguës dudit segment et pour couper ledit segment entre les deux parties obturées, et
des organes (2, 12) d'actionnement desdits moyens d'aplatissement, d'obturation et de coupe, ainsi qu'un moyen de télécommande et de télécontrôle (51) desdits organes d'actionnement, caractérisée en ce que ledit moyen d'obturation et de coupe (4) comprend un moyen (4) pour couper partiellement et faire fondre localement, à l'intérieur de ladite coupe, lesdites deux parties contiguës, de manière à les obturer.

2. Machine selon la revendication 1, caractérisée en ce que ledit moyen de manipulation (50) comprend un chariot mobile.

3. Machine selon la revendication 1 ou 2, caractérisée en ce que ledit moyen de manipulation (50) comprend un bras extensible.

4. Machine selon les revendications précédentes, caractérisée en ce que ledit moyen (3, 31) d'aplatissement d'un segment de tuyau comprend un ensemble d'emboutissage et ledit moyen d'obturation et de coupe (4) comprend un système à laser.

5. Machine selon la revendication 4, dans laquelle ledit système à laser (4) comprend un chalumeau équipé d'une tête télescopique (71) pour focaliser un rayon laser le long d'une section coupée (32).

6. Machine selon la revendication 5, dans laquelle ladite tête télescopique (71) est mobile transversalement par rapport à ladite section coupée (32) pour focaliser ledit rayon laser le long d'au moins deux sections (33, 34) parallèles à ladite section coupée (32).

7. Machine selon les revendications précédentes, caractérisée en ce que lesdits organes d'actionnement (2, 12) consistent en des vérins hydrauliques.

8. Machine selon les revendications précédentes, caractérisée en ce que ledit moyen de télécommande et de télécontrôle (51) comprend un poste de télécommande à connexion par câble ou par radio.

9. Machine selon les revendications précédentes et comprenant un moyen de télé-affichage.

10. Machine selon les revendications précédentes et comprenant des moyens (21, 21A, 22, 22A) pour prélever et enlever des segments du tuyau coupé.
